# EUROPÄISCHE PATENTSCHRIFT

(11) **EP 1 817 533 B1**
(45) Veröffentlichungstag und Bekanntmachung des Hinweises auf die Patenterteilung: **10.01.2018**
(21) Anmeldenummer: 05812225.0
(22) Anmeldetag: 17.11.2005
(51) Int. Cl.: F28D 7/16, F28F 13/12

(54) **NIEDERTEMPERATURKÜHLMITTELKÜHLER**
LOW-TEMPERATURE COOLANT COOLER
REFROIDISSEUR DE FLUIDE DE REFROIDISSEMENT BASSE TEMPERATURE

(30) Priorität: 23.11.2004 DE 102004056592
(43) Veröffentlichungstag der Anmeldung: 15.08.2007
(73) Patentinhaber: MAHLE Behr GmbH & Co. KG, 70469 Stuttgart (DE)
(72) Erfinder: Haßdenteufel, Klaus, 70839 Gerlingen (DE)
(74) Vertreter: Grauel, Andreas
(86) Internationale Anmeldenummer: PCT/EP2005/012302
(87) Internationale Veröffentlichungsnummer: WO 2006/056358

(56) Entgegenhaltungen:
- EP-A- 0 710 811
- DE-A1- 10 127 084
- DE-A1- 19 719 252
- DE-A1- 19 962 391
- US-A- 4 332 293
- US-A- 5 329 988
- US-A1- 2002 153 131
- US-A1- 2004 050 543
- US-B2- 6 755 158
- "KUEHLMITTELGEKUEHLTE LADELUFTKUEHLER FUER KRAFTFAHRZEUG-MOTOREN" MTZ MOTORTECHNISCHE ZEITSCHRIFT, VIEWEG VERLAG, WIESBADEN, DE, Bd. 61, Nr. 9, September 2000 (2000-09), Seiten 592-599, XP000959361 ISSN: 0024-8525

## Beschreibung

Die Erfindung betrifft eine Verwendung eines Niedertemperaturkühlmittelkühlers zur indirekten Ladeluftkühlung einer Verbrennungskraftmaschine, mit einer Vielzahl von Flachrohren, die im Betrieb pro Stunde von 700 bis 1800 Litern Kühlmittel durchströmt werden und in Kühlmittelsammelkästen münden, wobei zwischen den Flachrohren Luftleiteinrichtungen, insbesondere Luftleitlamellen, angeordnet sind, die von zu kühlender Ladeluft umströmt werden.

Bei Ladeluftkühlern für Verbrennungskraftmaschinen kann die zu kühlende Ladeluft Temperaturen von bis zu 220 Grad Celsius oder höher aufweisen. Aufgrund der hohen Temperaturen können an der Eintrittsseite des Kühlers Schäden auftreten. Deshalb wird in der deutschen Offenlegungsschrift DE 199 62 391 A1 ein Ladeluftkühler vorgeschlagen, der durch mindestens zwei Kühlkreisläufe mit unterschiedlichen Kühlmitteltemperaturen gekennzeichnet ist, die jeweils durch Wärmeübertragerblöcke geführt sind, die in Strömungsrichtung der Luft hintereinander geschaltet sind. Der bekannte Ladeluftkühler umfasst einen Vorkühler, einen Hochtemperaturladeluftkühler und einen Niedertemperaturladeluftkühler. Der Niedertemperaturladeluftkühler wird über einen separaten Niedertemperaturkreislauf mit Kühlmittel beaufschlagt und wird daher auch als Niedertemperaturkühlmittelkühler bezeichnet. Das Kühlmittel weist beim Eintritt in den Niedertemperaturkühlmittelkühler beispielsweise eine Temperatur von 45 bis 60 Grad Celsius auf. Der Niedertemperaturkreislauf wird zum Beispiel durch eine elektrische Kühlmittelpumpe, die auch als Niedertemperaturkühlmittelpumpe bezeichnet wird, angetrieben. Der Kühlmitteldurchsatz des Niedertemperaturkühlmittelkühlers ist relativ gering und beträgt circa 700 bis 1800 Liter pro Stunde. Bekannte Niedertemperaturkühlmittelkühler weisen Flachrohre auf, die innen glatt ausgebildet sind. Um ausreichende Strömungsgeschwindigkeiten für den inneren Wärmeübergang zu erreichen, sind bei innen glatt ausgebildeten Flachrohren drei oder mehr Umlenkungen erforderlich.

Die US 2002/0153131 A1 offenbart einen Kondensator mit einer Vielzahl von Flachrohren, die an ihren beiden Enden in Kühlmittelsammelkästen münden, wobei zwischen den Flachrohren Luftleiteinrichtungen angeordnet sind, die von zu kühlender Ladeluft umströmt werden, wobei die Flachrohre eine Tiefe aufweisen, die kleiner/gleich 20 Millimeter ist; das die Flachrohre durchströmende Kältemittel in den Sammelkästen ein oder zweimal und maximal zweimal umgelenkt wird und die Flachrohre innen mit Turbulenz erzeugenden Einrichtungen ausgestattet sind.

Aufgabe der Erfindung ist es, eine Verwendung eines Niedertemperaturkühlmittelkühlers zur indirekten Ladeluftkühlung einer Verbrennungskraftmaschine, mit einer Vielzahl von Flachrohren, die im Betrieb pro Stunde von 700 bis 1800 Litern Kühlmittel durchströmt werden und in Kühlmittelsammelkästen münden, wobei zwischen den Flachrohren Luftleiteinrichtungen, insbesondere Luftleitlamellen, angeordnet sind, die von zu kühlender Ladeluft umströmt werden, zu schaffen, der über einen breiten Betriebsbereich des Kühlmitteldurchsatzes eine konstante Abkühlleistung gewährleistet.

Die Aufgabe wird mit den Merkmalen von Anspruch 1 gelöst.

Die zwischen den Flachrohren angeordneten Luftleiteinrichtungen werden im Betrieb von Luft umströmt, die dem Kühlmittel im Inneren der Flachrohre Wärme entzieht. Die Ausdehnung der Flachrohre in Luftdurchströmungsrichtung der Luftleiteinrichtungen wird als Tiefe der Flachrohre bezeichnet. Bekannte Niedertemperaturkühlmittelkühler sind mit Flachrohren ausgestattet, die innen glatt ausgebildet sind. Um ausreichende Strömungsgeschwindigkeiten für den inneren Wärmeübergang zu erreichen, sind drei oder mehr Umlenkungen in den Sammelkästen erforderlich. Im Rahmen der vorliegenden Erfindung wurde herausgefunden, dass ein bei bekannten Niedertemperaturkühlmittelkühlern festgestellter kühlmittelseitiger Druckverlust auf einen ausgeprägten Einfluss der Kühlmittelviskosität und damit letztendlich auf die Umgebungstemperatur zurückzuführen ist. Zusammen mit einer flachen Pumpenkennlinie ergibt sich daraus eine starke Abhängigkeit des Kühlmitteldurchsatzes und der Leistung von der Außentemperatur. Trotz mehrfacher Umlenkungen ist die Strömung in den bekannten Niedertemperaturkühlmittelkühlern mit innen glatten Rohren laminar oder im Übergangsbereich laminar bis turbulent. Die Leistung der bekannten Niedertemperaturkühlmittelkühler ist damit stark abhängig vom Kühlmitteldurchsatz. Das kann dazu führen, dass, insbesondere bei sehr tiefen Temperaturen, der Druckaufbau der Niederdrucktemperaturkühlmittelpumpe wegen des hohen Widerstands im Niedertemperaturkühlmittelkühler nicht ausreicht. Durch die erfindungsgemäße Auslegung des Niederdrucktemperaturkühlmittelkühlers kann über einen breiten Betriebsbereich des Kühlmitteldurchsatzes eine nahezu konstante Abkühlleistung aufrechterhalten werden. Dadurch werden die Einflüsse der Umgebungstemperatur und von Toleranzen auf die Ladeluftkühlung deutlich abgeschwächt.

Ein bevorzugtes Ausführungsbeispiel der Verwendung des Niedertemperaturkühlmittelkühlers ist dadurch gekennzeichnet, dass die Flachrohre mit den Turbulenz erzeugenden Einrichtungen so ausgelegt sind, dass das Verhältnis zwischen dem maximalen und dem minimalen Druckverlust in den Flachrohren bei einem Kühlmitteldurchsatz von 700 bis 1800 Litern pro Stunde kleiner als 3 ist. Dadurch wird ein schnelleres Ansprechen der indirekten Ladeluftkühlung bei tiefen Außentemperaturen erreicht.

Ein weiteres bevorzugtes Ausführungsbeispiel der Verwendung des Niedertemperaturkühlmittelkühlers ist dadurch gekennzeichnet, dass das Verhältnis zwischen der maximalen und der minimalen Nusseltzahl in den Flachrohren bei einem Kühlmitteldurchsatz von 700 bis 1800 Litern pro Stunde kleiner als 3 ist. Die Nusseltzahl ergibt sich aus dem Verhältnis zwischen dem Produkt aus der Wärmeübergangszahl mit einer charakteristischen Länge und der Wärmeleitfähigkeit des verwendeten Materials. Bei dem verwendeten Material handelt es sich vorzugsweise um Aluminiumblech.

Ein weiteres bevorzugtes Ausführungsbeispiel der Verwendung des Niedertemperaturkühlmittelkühlers ist dadurch gekennzeichnet, dass die Flachrohre an wenigstens einer ihrer Flachseiten nach innen gerichtete Einprägungen aufweisen. Die Einprägungen sind vorzugsweise entsprechend den Ausführungsbeispielen ausgebildet, die in der deutschen Offenlegungsschrift DE 101 27 084 A1 offenbart sind.

Ein weiteres bevorzugtes Ausführungsbeispiel der Verwendung des Niedertemperaturkühlmittelkühlers ist dadurch gekennzeichnet, dass in den Flachrohren Turbulenzeinlagen angeordnet sind. Die Turbulenzeinlagen sind vorzugsweise mit ähnlichen Einprägungen ausgestattet, wie die vorab beschriebenen Flachrohre.

Weitere Vorteile, Merkmale und Einzelheiten der Erfindung ergeben sich aus der nachfolgenden Beschreibung, in der unter Bezugnahme auf die Zeichnung verschiedene Ausführungsbeispiel im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische, perspektivische Darstellung eines Niedertemperaturkühlmittelkühlers zur erfindungsgemäßen Verwendung gemäß einem ersten Ausführungsbeispiel;
- Figur 2: eine ähnliche Darstellung wie in Figur 1 zur erfindungsgemäßen Verwendung gemäß einem weiteren Ausführungsbeispiel;
- Figur 3: ein kartesisches Koordinatendiagramm, in dem die Ladelufttemperatur nach dem Ladeluftkühler über dem Kühlmitteldurchsatz aufgetragen ist;
- Figur 4: ein kartesisches Koordinatendiagramm, in dem der Kühlmitteldruck über dem Kühlmitteldurchsatz aufgetragen ist und
- Figur 5: ein kartesisches Koordinatendiagramm, in dem die auf eine minimale Nusseltzahl normierte Nusseltzahl beziehungsweise der auf einen minimalen Druckverlust normierte Druckverlust im Kühlernetz über dem Kühlmitteldurchsatz aufgetragen ist.

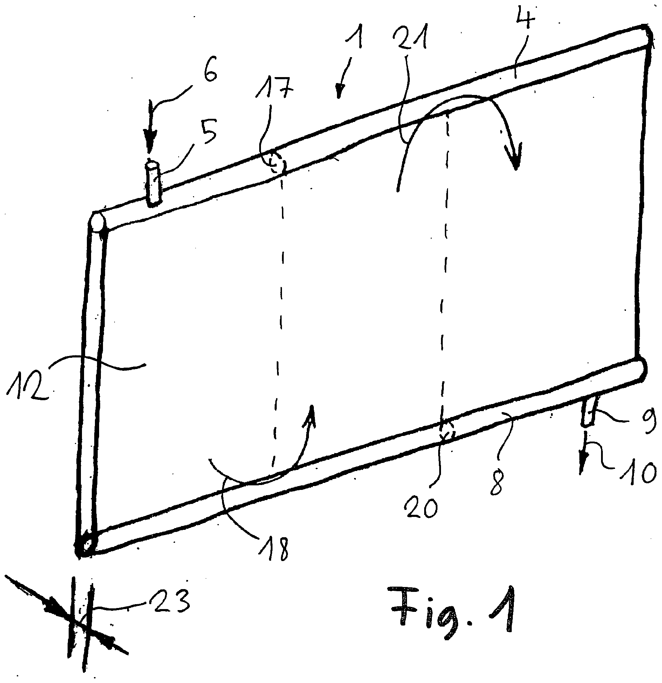

In Figur 1 ist ein Niedertemperaturkühlmittelkühler 1 zur erfindungsgemäßen Verwendung schematisch und perspektivisch dargestellt. Der Niedertemperaturkühlmittelkühler 1 umfasst einen oberen Sammelkasten 4, an dem ein Eintrittsstutzen 5 für Kühlmittel vorgesehen ist. Durch einen Pfeil 6 ist das in den oberen Sammelkasten 4 eintretende Kühlmittel angedeutet. Der Kühlmitteldurchsatz durch den Niedertemperaturkühlmittelkühler 1 ist bei erfindungsgemäßer Verwendung größer als 0,2 und kleiner als 0,5 kg/s.

Der Niedertemperaturkühlmittelkühler 1 weist des Weiteren einen unteren Sammelkasten 8 auf, an dem ein Austrittsstutzen 9 für das Kühlmittel vorgesehen ist. Das aus dem unteren Sammelkasten 8 austretende Kühlmittel ist durch einen Pfeil 10 angedeutet. Bei dem Kühlmittel handelt es sich vorzugsweise um Wasser mit speziellen Zusätzen.

Zwischen dem oberen Sammelkasten 4 und dem unteren Sammelkasten 8 ist ein Wärmetauscherblock 12 vorgesehen, der eine Vielzahl von (nicht dargestellten) Flachrohren umfasst, die zwischen den Sammelkästen 4 und 8, die auch als Kühlmittelsammelkästen bezeichnet werden, verlaufen. Zwischen den Flachrohren sind Luftleitlamellen, zum Beispiel in Form von Wellrippen angeordnet, die von zu kühlender Ladeluft umströmt werden.

In dem oberen Sammelkasten 4 ist eine erste Trennwand 17 angeordnet, durch die das durch den Eintrittsstutzen 5 in den Niedertemperaturkühlmittekühler 1 eintretende Kühlmittel entlang eines Pfeiles 18 ein erstes Mal umgelenkt wird. In dem unteren Sammelkasten 8 ist eine zweite Trennwand 20 angeordnet, durch die das Kühlmittel entlang eines Pfeiles 21 ein zweites Mal in den Niedertemperaturkühlmittelkühler 1 umgelenkt wird, bevor es durch den Austrittsstutzen 9 aus dem Niedertemperaturkühlmittelkühler 1 austritt.

Der Niedertemperaturkühlmittelkühler 1 ist vorzugsweise aus Aluminiumblech ausgebildet und weist eine Tiefe 23 von kleiner/gleich 20 Millimetern auf. Unter Umständen vorteilig weist der Niedertemperaturkühlmittelkühler zur erfindungsgemäßen Verwendung eine größere Breite als Höhe auf, wie in Fig. 1 beispielhaft dargestellt ist.

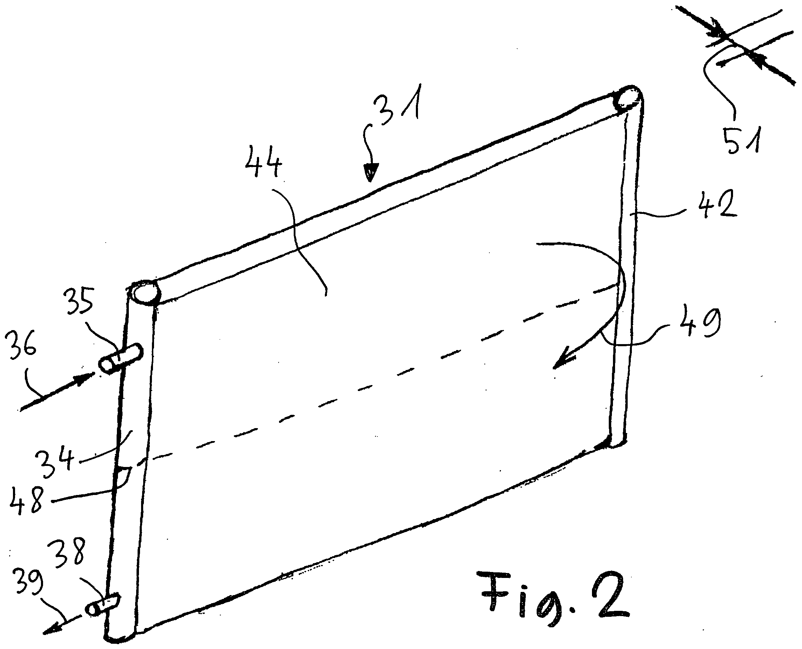

In Figur 2 ist ein Niedertemperaturkühlmittelkühler 31 schematisch und perspektivisch dargestellt. Der Niedertemperaturkühlmittelkühler 31 umfasst einen linken Sammelkasten 34, der mit einem Eintrittsstutzen 35 ausgestattet ist. Durch den Eintrittsstutzen 35 tritt, wie durch einen Pfeil 36 angedeutet ist, Kühlmittel in den linken Sammelkasten 34 ein. Der Massendurchsatz des Kühlmittels ist größer als 0,2 und kleiner als 0,5 kg/s. Außerdem ist der linke Sammelkasten 34 mit einem Austrittsstutzen 38 ausgestattet. Durch den Austrittsstutzen 38 tritt das Kühlmittel aus dem Niedertemperaturkühlmittelkühler 31 aus.

Des Weiteren weist der Niedertemperaturkühlmittelkühler 31 einen rechten Sammelkasten 42 auf. Zwischen dem linken Sammelkasten 34 und dem rechten Sammelkasten 42 ist ein Wärmetauscherblock 44 ausgebildet. Der Wärmetauscherblock 44 umfasst eine Vielzahl von (nicht dargestellten) Flachrohren, die in horizontaler Richtung zwischen dem linken Sammelkasten 34 und dem rechten Sammelkasten 42 verlaufen. Zwischen den Flachrohren sind Luftleitlamellen, zum Beispiel in Form von Wellrippen, angeordnet, die von zu kühlender Ladeluft umströmt werden.

In dem linken Sammelkasten 34 ist eine erste Trennwand 48 vorgesehen, durch welche das durch den Eintrittsstutzen 35 in den Niedertemperaturkühlmittelkühler 31 eintretende Kühlmittel entlang eines Pfeiles 49 ein einziges Mal umgelenkt wird, bevor es durch den Austrittsstutzen 38 austritt. Der in Figur 2 dargestellte Niedertemperaturkühlmittelkühler 31 hat eine Tiefe 51 von maximal 20 Millimetern.

Die in den Figuren 1 und 2 dargestellten Niedertemperaturkühlmittelkühler weisen jeweils eine Bautiefe von maximal 20 Millimetern auf. Die Flachrohre der Niedertemperaturkühlmittelkühler sind mit Turbulenz erzeugenden Oberflächen, wie sie in den Figuren 2 bis 8 der deutschen Offenlegungsschrift DE 101 27 084 A1 offenbart sind, oder mit Turbulenz erzeugenden Einschüben, die auch als Turbulatoren bezeichnet werden, sowie mit maximal zwei Umlenkungen ausgestattet. Dadurch wird erreicht, dass das Verhältnis des Druckverlustes in den Rohren bei einem minimalen/maximalen Massenstrom (0,2 kg/s kleiner Massenstrom kleiner 0,5 kg/s) kleiner als 3 ist. Gleichzeitig variiert die Nusseltzahl zwischen maximalem und minimalem Kühlmitteldurchsatz maximal um den Faktor 3.

Wie in Fig. 2 beispielhaft dargestellt ist, ist es unter Umständen vorteilhaft, wenn der Niedertemperaturkühlmittelkühler zur erfindungsgemäßen Verwendung eine Breite aufweist, die kleiner als seine Höhe ist. Die Höhe ist dabei die Abmessung in Rohrlängsrichtung.

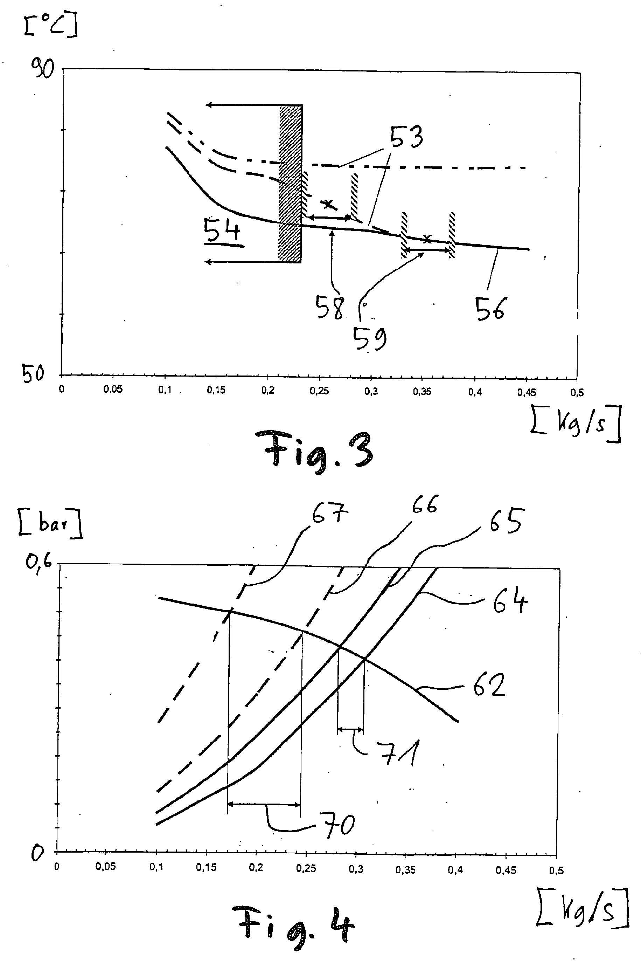

In Figur 3 ist die Ladelufttemperatur nach dem kühlmittelgekühlten Ladeluftkühler in Grad Celsius über den Kühlmitteldurchsatz in kg/s aufgetragen. Anhand verschiedener Kennlinien ist die Auswirkung der erfindungsgemäßen Auslegung auf die Ladeluftabkühlung dargestellt. Anhand zweier Kennlinien 53 ist die Ladeluftabkühlung für Kühler ohne turbulenzsteigernde Rohrinnenseite mit einer laminaren Rohrströmung beziehungsweise einer Rohrströmung im Umschlagbereich zwischen laminar und turbulent dargestellt. Mit 54 ist ein Bereich dargestellt, der wegen eines unerwünschten Siedens im Kühlmittel gekühlten Ladeluftkühler zu vermeiden ist. Mit 56 ist eine Kennlinie eines Niedertemperaturkühlmittelkühlers zur erfindungsgemäßen Verwendung, der auch als Ladeluftkühler bezeichnet wird, bezeichnet. Der Niedertemperaturkühlmittelkühler zur erfindungsgemäßen Verwendung ist mit einer turbulenzsteigernden Rohrinnenseite ausgestattet. Dadurch wird eine verbesserte und nahezu konstante Ladeluftabkühlung über einen breiten Kühlmitteldurchsatzbereich gewährleistet. Mit 58 und 59 sind Betriebspunkte mit einem toleranzbedingten Streuband bezeichnet.

In Figur 4 ist der Kühlmitteldruck in bar über dem Kühlmitteldurchsatz in kg/s aufgetragen. Mit 62 ist eine Pumpenkennlinie bezeichnet. Mit 64 bis 67 sind verschiedene Anlagenkennlinien eines Wärmeübertragers bei erfindungsgemäßer Verwendung (64, 65) und eines bekannten Wärmeübertragers (66, 67) bezeichnet. Die Anlagenkennlinie 64 entspricht einer Umgebungstemperatur von 35 Grad Celsius. Die zugehörige Anlagenkennlinie 65 entspricht einer Umgebungstemperatur von -5 Grad Celsius. Die Anlagenkennlinie 66 wiederum entspricht einer Umgebungstemperatur von 35 Grad Celsius. Die zugehörige Anlagenkennlinie 67 entspricht einer Umgebungstemperatur von -5 Grad Celsius. Aus Fig. 4 ist eine vorteilhafte Absenkung des für einen gewünschten Kühlmitteldurchsatz erforderlichen Druckes durch die vorliegende Erfindung ersichtlich.

Mit 70 ist die Differenz des Kühlmitteldurchsatzes bei den verschiedenen Umgebungstemperaturen bei einer Auslegung nach dem Stand der Technik bezeichnet. Da der Temperatureinfluss auf den Kühlmitteldurchsatz bei einer Auslegung nach dem Stand der Technik recht groß ist, ist die Differenz 70 ebenfalls recht groß. Durch 71 ist die Differenz der Massendurchsätze bei verschiedenen Temperaturen bei einer erfindungsgemäßen Auslegung mit einer turbulenzsteigernden Innenseite dargestellt. Ein Vergleich zwischen 70 und 71 macht deutlich, dass der Temperatureinfluss durch die erfindungsgemäße Auslegung deutlich reduziert werden kann.

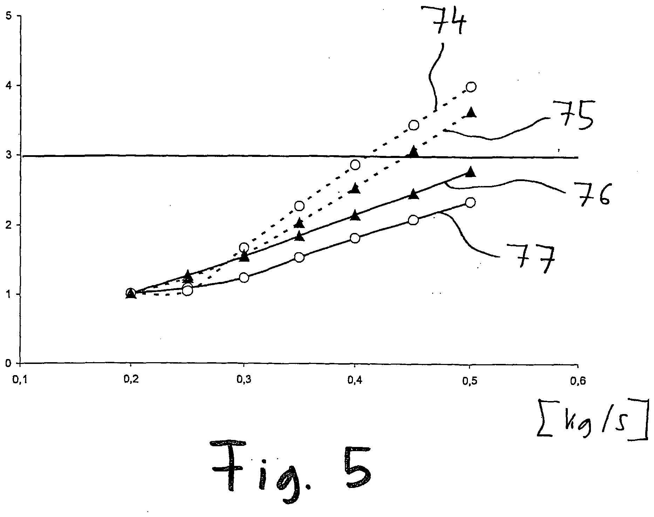

In Figur 5 ist die auf eine minimale Nusseltzahl normierte Nusseltzahl beziehungsweise der auf einen minimalen Druckverlust normierte Druckverlust in den Flachrohren über dem Kühlmitteldurchsatz aufgetragen. Da sämtliche aufgetragenen Größen mit wachsendem Kühlmitteldurchsatz stetig ansteigen und bei 0,2 kg/s minimal sind, beginnen sämtliche Kurven bei 0,2 kg/s mit dem Wert 1.

Mit 74 ist die normierte Nusseltzahl bei glatten Rohren mit drei Umlenkungen bezeichnet. Mit 75 ist der normierte Druckverlust bei glatten Rohren mit drei Umlenkungen bezeichnet. Mit 76 ist der normierte Druckverlust bei einer erfindungsgemäßen Auslegung mit einer Umlenkung bezeichnet. Mit 77 ist d die normierte Nusseltzahl bei der neuen Auslegung mit einer Umlenkung bezeichnet. In Figur 5 sieht man, dass der Einfluss der Kühlmittelmenge auf die Wärmeübertragungsfunktion und der kühlmittelseitige Druckverlust durch die erfindungsgemäßen Maßnahmen reduziert werden kann.

## Patentansprüche

1. Verwendung eines Niedertemperaturkühlmittelkühlers zur indirekten Ladeluftkühlung einer Verbrennungskraftmaschine, mit einer Vielzahl von Flachrohren, die im Betrieb pro Stunde von 700 bis 1800 Litern Kühlmittel durchströmt werden und die an ihren beiden Enden in Kühlmittelsammelkästen (4,8;34,42) münden, wobei zwischen den Flachrohren Luftleiteinrichtungen, insbesondere Luftleitlamellen, angeordnet sind, die von zu kühlender Ladeluft umströmt werden, **gekennzeichnet durch** die folgenden Merkmale:
a) die Flachrohre weisen eine Tiefe (23;51) auf, die kleiner/gleich 20 Millimeter ist;
b) das die Flachrohre durchströmende Kühlmittel wird in den Sammelkästen (4,8;34,42) ein oder zweimal und maximal zweimal umgelenkt; und
c) die Flachrohre sind innen mit Turbulenz erzeugenden Einrichtungen ausgestattet.

2. Verwendung nach Anspruch 1, **dadurch gekennzeichnet, dass** die Flachrohre mit den Turbulenz erzeugenden Einrichtungen so ausgelegt sind, dass das Verhältnis zwischen dem maximalen und dem minimalen Druckverlust in den Flachrohren bei Kühlmitteldurchsätzen von 700 bis 1800 Litern pro Stunde kleiner als 3 ist.

3. Verwendung nach Anspruch 2, **dadurch gekennzeichnet, dass** das Verhältnis zwischen der maximalen und der minimalen Nusseltzahl in den Flachrohren bei Kühlmitteldurchsätzen von 700 bis 1800 Litern pro Stunde oder von 0,2 bis 0,5 kg/s kleiner als 3 ist.

4. Verwendung nach einem der vorhergehenden Ansprüche, **dadurch gekennzeichnet, dass** die Flachrohre an wenigstens einer ihrer Flachseiten nach innen gerichtete Einprägungen aufweisen.

5. Verwendung nach einem der vorhergehenden Ansprüche, **dadurch gekennzeichnet, dass** in den Flachrohren Turbulenzeinlagen angeordnet sind.

## Claims

1. Use of a low-temperature coolant cooler for the indirect charge air cooling of an internal combustion engine, having a plurality of flat tubes which, in operation, are traversed by 700 to 1800 litres of coolant per hour and open out into coolant collecting tanks (4, 8; 34, 42) at both ends, wherein air guide devices, in particular air guide plates, are arranged between the flat tubes, around which charge air which is to be cooled flows, **characterised by** the following features:
a) the flat tubes have a depth (23; 51) which is less than/equal to 20 millimetres;
b) the coolant which traverses the flat tubes is deflected once or two times and a maximum of two times in the collecting tanks (4, 8; 34, 42); and
c) the flat tubes are equipped at the inside with turbulence-generating devices.

2. Use as claimed in claim 1, **characterised in that** the flat tubes with the turbulence-generating devices are designed in such a way that the ratio between the maximum and minimum pressure loss in the flat tubes is less than 3 for coolant throughputs of 700 to 1800 litres per hour.

3. Use as claimed in claim 2, **characterised in that** the ratio between the maximum and minimum Nusselt number in the flat tubes is less than 3 for coolant throughputs of 700 to 1800 litres per hour or of 0.2 to 0.5 kg/s.

4. Use as claimed in one of the preceding claims, **characterised in that** the flat tubes have inwardly aligned indentations on at least one of their flat sides.

5. Use as claimed in one of the preceding claims, **characterised in that** turbulence inserts are arranged in the flat tubes.

## Revendications

1. Utilisation d'un radiateur à liquide de refroidissement à basse température prévu pour le refroidissement indirect de l'air de suralimentation d'un moteur à combustion interne, ledit radiateur comprenant une multiplicité de tubes plats qui, en cours de fonctionnement, sont traversés par 700 à 1800 litres, par heure, de liquide de refroidissement et qui, au niveau de leurs deux extrémités, débouchent dans des bacs collecteurs de liquide de refroidissement (4, 8 ; 34, 42), où des dispositifs déflecteurs d'air, en particulier des lamelles déflectrices d'air, sont disposés entre les tubes plats, dispositifs ou lamelles qui sont entouré(e)s par de l'air de suralimentation à refroidir,
**caractérisée par** les propriétés suivantes :
a) les tubes plats présentent une profondeur (23 ; 51) qui est inférieure / égale à 20 millimètres ;
b) le liquide de refroidissement traversant les tubes plats est redirigé dans les bacs collecteurs (4, 8 ; 34, 42) une fois ou deux fois et au maximum deux fois ; et
c) les tubes plats sont dotés, à l'intérieur, de dispositifs générant des turbulences.

2. Utilisation selon la revendication 1, **caractérisée en ce que** les tubes plats dotés des dispositifs générant des turbulences sont conçus de manière telle, que le rapport, qui s'établit entre la perte de pression maximale et minimale se produisant dans les tubes plats à des débits de liquide de refroidissement compris entre 700 et 1800 litres, par heure, soit inférieur à 3.

3. Utilisation selon la revendication 2, **caractérisée en ce que** le rapport, qui s'établit entre la perte de pression maximale et minimale se produisant dans les tubes plats à des débits de liquide de refroidissement compris entre 700 et 1800 litres par heure, ou bien compris entre 0,2 kg/s et 0,5 kg/s, soit inférieur à 3.

4. Utilisation selon l'une quelconque des revendications précédentes, **caractérisée en ce que** les tubes plats, sur au moins l'un de leurs côtés plats, présentent des parties matricées en creux, tournées vers l'intérieur.

5. Utilisation selon l'une quelconque des revendications précédentes, **caractérisée en ce que** des éléments intercalaires générant des turbulences sont disposés dans les tubes plats.
